(19) Europäisches Patentamt

European Patent Office

Office européen des brevets

(11) Veröffentlichungsnummer: **0 234 239 B1**

(12) **EUROPÄISCHE PATENTSCHRIFT**

(45) Veröffentlichungstag der Patentschrift: **15.04.92**

(21) Anmeldenummer: **87100582.3**

(22) Anmeldetag: **17.01.87**

(51) Int. Cl.⁵: **C23G 3/00**, B65D 85/84

(54) **Beizbehälter.**

(30) Priorität: **18.02.86 DE 3605094**

(43) Veröffentlichungstag der Anmeldung:
**02.09.87 Patentblatt 87/36**

(45) Bekanntmachung des Hinweises auf die
Patenterteilung:
**15.04.92 Patentblatt 92/16**

(84) Benannte Vertragsstaaten:
**AT BE CH DE ES FR GB GR IT LI LU NL SE**

(56) Entgegenhaltungen:
**DE-A- 2 020 750**
**DE-A- 2 201 409**
**US-A- 1 920 486**

**SOVIET INVENTIONS ILLUSTRATED, Sektion "Chemical", Woche 8131, 9. September 1981; & SU-A-779 444 (KARPUSHIN V.N.) 15-11-1980**

**M. STRASCHILL: "Neuzeitliches Beizen von Metallen", 2. Auflage, 1972, Seiten 30-35, Eugen G. Leuze Verlag, Saulgau/Württ., DE**

(73) Patentinhaber: **OEKOLOGIA Beteiligungs-, Handels-, und Patentverwertungsgesellschaft m.b.H.**
**Walter-Flex-Weg 18**
**A-8010 Graz(AT)**

(72) Erfinder: **Ackermann, Werner**
**Thurnstrasse 35**
**W-5900 Siegen 1(DE)**
Erfinder: **Schirmuly, Klaus**
**Heuslingstrasse 510a**
**W-5905 Freudenberg/Bottenberg(DE)**

(74) Vertreter: **Piso, Eberhard, Dr. et al**
**Patentanwälte Barger, Piso & Partner Postfach 333**
**A-1011 Wien(AT)**

## Beschreibung

Die Erfindung betrifft einen Beizbehälter, insbesondere für Stückgut in Feuerverzinkereien. Die chemische Vorbehandlung von Stückgut in Fertigteilverzinkereien erfolgt vorzugsweise in offenen Standbehältern. Diese Behälter unterliegen einer erheblichen Korrosionsbelastung, zum einen durch die Behandlungsmedien, zum andern durch aggressive Umgebungsatmosphäre bei hoher mechanischer Beanspruchung durch das Material-Handling.

Als Behandlungsmedien werden beispielsweise Entfettungslösung Beizlösungen, Spülwasser und Flußmittellösungen verwendet. Folgende Behälter kommen vorzugsweise zum Einsatz:

Stahlbehälter als freistehender, selbsttragender Behälter ohne chemischen Sonderschutz an der Behälteroberfläche.

Die Eisenlöslichkeit der Behandlungsmedien wird durch Zugabe von Inhibitoren stark reduziert. Die Bauart erfordert eine äußerst exakte und disziplinierte Fahrweise der Behandlungsmedien. Bereits relativ geringfügige Abweichungen können zu erhöhter Eisenlöslichkeit und somit zu einer erheblichen Reduzierung der Behälterstandzeit führen.

Damit ist latent die Gefahr einer Behälterzerstörung und somit unkontrollierter Austritt der Behandlungsmedien gegeben. Stahlbehälter mit glasfaserverstärkter Kunststoffbeschichtung, der ein freistehender, selbsttragender Behälter ist. Stahlkonstruktion mit oberer Randverstärkung, Boden- und Seitenwandspanten, Kopfwandriegeln sowie der umlaufenden Verstärkungswinkel und der Blechbeplankung im Boden- und Wandbereich.

Die Mediumseite (Betriebsraum) ist zusätzlich mit einer ca. 5mm starken glasfaserverstärkten Kunststoffbeschichtung versehen. Auf eine "wenige mm-starke" Kunststoffauflage auf verschiedene Werkstoffe zum Schutz der Oberfläche weist bspw. auch die Druckschrift "Ullmanns Encyclopädie der technischen Chemie" hin.

Die GFK-Beschichtung ist durch das Stückgut-Handling permanent gefährdet. Mechanische Beschädigungen der GFK-Beschichtung führen zur Gesamtzerstörung des Behälters. Ein mechanischer Schutz des Betriebsraumes ist zwingend erforderlich. Die Bauart erfordert ein äußerst diszipliniertes Material-Handling. Hohe Investitionskosten bei latenter Gefahr der Behälterzerstörung und somit unkontrollierter Austritt der Behandlunsmedien.

Stahl/Kunststoffverbundbehälter als freistehender, selbsttragender Behälter. Behälter aus glasfaserverstärktem Polyester mit Stahlrahmenkonstruktion. Diese Bauart verlangt ein äußerst diszipliniertes Material-Handling. Hohe Investitionskosten bei latenter Gefahr der Behälterzerstörung und somit unkontrollierter Austritt der Behandlungsmedien.

Betonbehälter mit keramischer Auskleidung, der ein freistehender, selbsttragender Behälter ist. Säureschutz im Betriebsraum bestehend aus Beton, Dichtungsisolierung und Plattenbelag im Kittbett. Diese Bauart verlangt ein äußerst diszipliniertes Material-Handling. Nicht auszuschließende Zerstörungen der Plattenlage führen in den meisten Fällen auch zu einer Zerstörung der Dichtungsisolierung. Solche Zerstörungen sind lokal nicht zu begrenzen und führen zu großflächigen Schäden. Die damit notwendigen Teilsanierungen sind oft nur eine temporäre Schadensbehebung.

Sehr hohe Investitions- und Betriebskosten.

Alle vorgenannten Behälterbauarten bedingen die Aufstellung in einer Auffangtasse, d.h. bei Behälterzerstörung muß sichergestellt sein, daß das auslaufende Medium sicher aufgefangen wird. Dies in Einklang mit den öffentlich rechtlichen Vorschriften zur Lagerung von wassergefährdenden Stoffen.

Es zeigen bspw. die US-A 1 920 486 eine Betonwanne, welche mit einem Belag aus Teer, Asphalt und Holzplanken als Schutzschicht für die Wanne ausgekleidet ist.

Die DE-A 2 201 409 offenbart einen doppelwandigen Behälter mit zwei freien Zwischenräumen, welche entweder mit einem gemeinsamen oder jeder für sich mit einem Leckwarngerät verbunden sind.

Ferner lassen sich bei dem für konventionelle Stückverzinkereien charakteristischen Chargenbetrieb und der besonderen Geometrie des zu behandelnden Stückgutes Ausschleppverluste der Behandlungsmedien nicht vermeiden. Das mit dem Stückgut ausgeschleppte Behandlungsmedium fließt unkontrolliert über den Außenbereich der Standbehälter in die Auffangtasse. Hier erfolgt eine unkontrollierte Vermischung der in ihrer Zusammensetzung unkontrollierten Medien. Eine kontrollierte Rückführung des Gemisches ist in der Regel nicht möglich.

Die Ausschleppverluste führen somit zu einer permanenten Füllstandverringerung in den Standbehältern und müssen in Abhängigkeit von der Verlustrate ersetzt werden.

Der Ausgleich der Verlustrate und die Entsorgung der Ausschleppverluste aus der Auffangtasse führt zu einer erheblichen Steigerung der Betriebskosten und belastet somit als wesentlicher Faktor die Gesamtwirtschaftlichkeit.

Aufgabe der Erfindung ist es, einen Beizbehälter zu schaffen, der alle betreiberspezifischen Voraussetzungen, wie mechanische Belastbarkeit, chemische Resistenz usw. erfüllt und somit maximale Betriebssicherheit bietet, bei wesentlich gesteigerter Wirtschaftlichkeit in Einklang mit den öffentlich rechtlichen Bestimmungen, insbesondere den Bestimmungen des Gewässerschutzes und unter Berücksichtigung der für den Umweltschutz relevanten Erfordernisse.

Die Erfindung löst die Aufgabe dadurch, daß der Beizbehälter aus einer ersten und einer zweiten Kunststoffwanne mit dazwischen liegender Kunstkeramikschicht besteht und der Kunststoffverbundbehälter von einem Betonmantel umfaßt ist.

Der Beizbehälter wird nach kompletter Vormontage und nach dem Einbringen einer Betonstahlarmierung komplett mit Beton hintergossen.

Weitere vorteilhafte Ausführungsformen des erfindungsgemäßen Beizbehälters sind durch die Merkmale der Ansprüche 2-5 beschrieben.

Weiter siehe im Text der ursprünglichen Beschreibung Seite 5, Absatz 2.

Diese Lösung reduziert durch die besondere Anordnung eines Auffangkanales mit integriertem Rückführungssystem zum jeweiligen Standbehälter die Verlustrate an Behandlungsmedien auf ein absolutes Minimum.

Der weitere Vorteil des Beizbehälters nach der Erfindung liegt insbesondere darin, daß eine Auffangtasse für eventuell ausströmendes Vorbehandlungsmedium nicht erforderlich ist. Das unkontrollierte Ausströmen der Behandlungsmedien ist bei der Bauart nach der Erfindung ausgeschlossen, bei wesentlich reduzierten Investitions- und Betriebskosten, somit bei wesentlich gesteigerter Gesamtwirtschaftlichkeit und höherem Sicherheitsgrad.

Im folgenden wird die Erfindung anhand einer schematischen Zeichnung näher erläutert.

Es zeigen

Fig. I    einen Querschnitt eines Beizbehälters mit seitlichem Bodenkanal und seitlicher Pumpe,

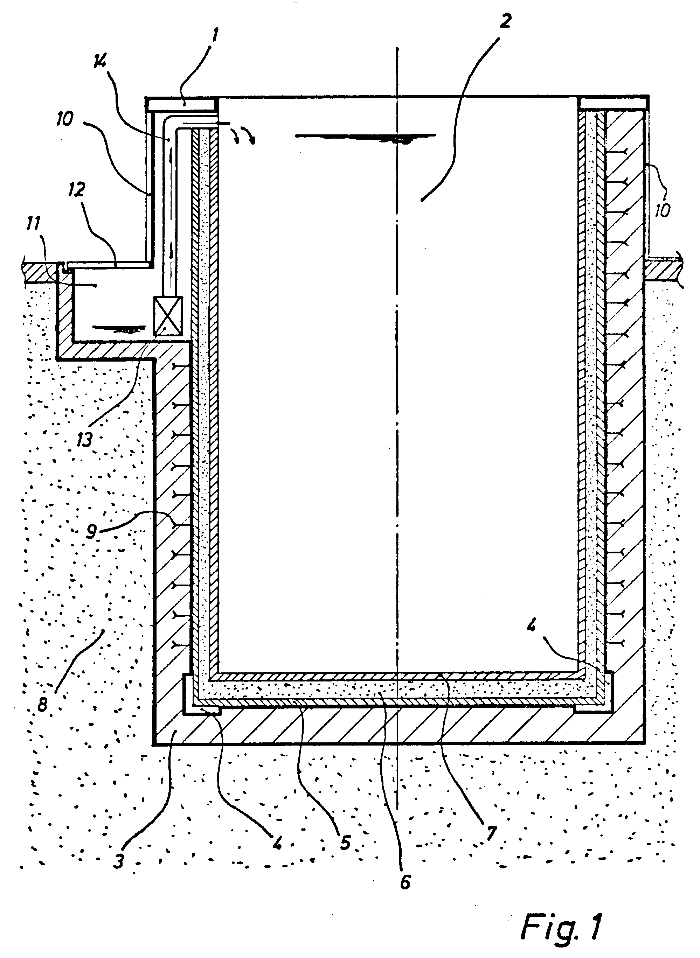

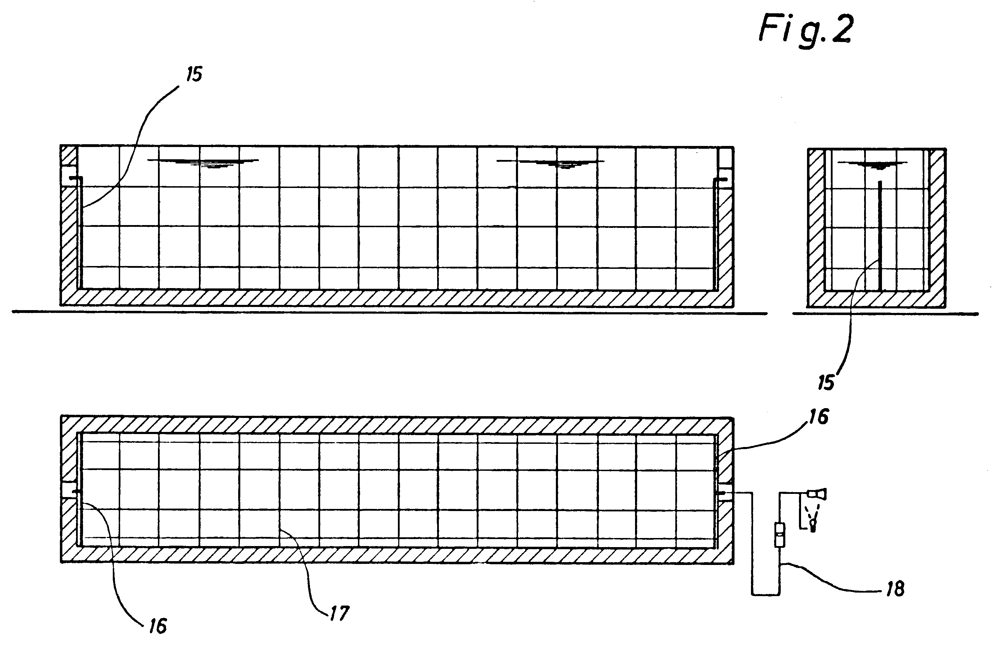

Fig. 2    einen Beizbehälter mit schematischer Darstellung der Leckanzeigesystem-Anordnung,

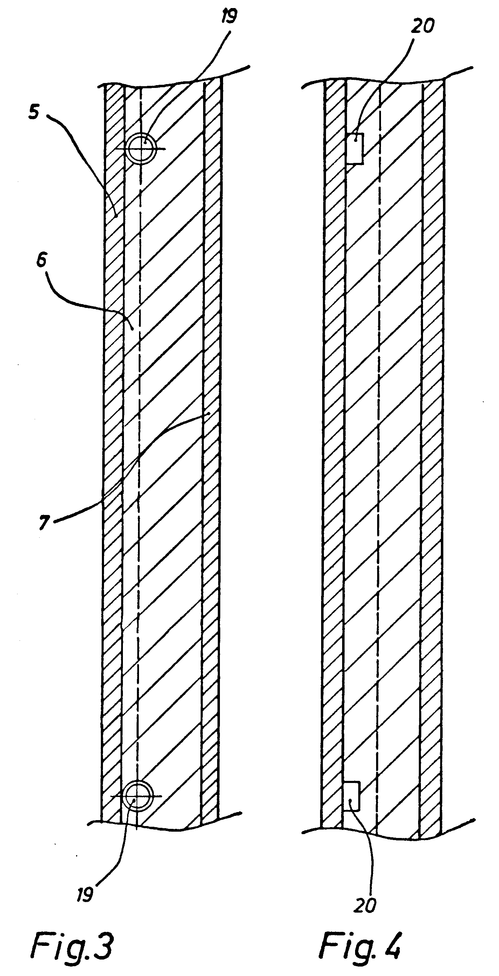

Fig. 3    einen Querschnitt einer Behälterwand des Beizbehälters mit Leckrohr,

Fig. 4    einen Querschnitt einer Behälterwand (Vertikalschnitt) des Beizbehälters mit Lecknute.

Der Beizbehälter, insbesondere für Stückgut in Feuerverzinkereien, besteht im wesentlichen aus Behälterrandabdeckung I, Betonstahl mit Armierung 3, Verstärkungswinkel 4, erste Kunststoffwanne 7, Kunstkeramikverschleißschicht 6, zweite Kunststoffwanne 5, Y-Anker 9, Kunststoffverkleidung 10, Bodenkanal II, perforierter Bodenkanalabdeckung I2, Pumpe I3 mit Steigrohr I4, Leckanzeigesystem, bestehend aus Steigrohr I5, Querkanal I6, Kanalsystem I7, Schwimmerschaltung mit optischer/akustischer Alarmgebung I8, Leckrohr I9 und Lecknute 20.

Der Behälter kann weiterhin ausgerüstet werden mit Absaugeinrichtung sowie mit Rohrstutzen für eine Badbeheizung. Diese Systeme sind nicht dargestellt. Nicht dargestellt ist des weiteren der Dehnungsausgleich bei heißgefahrenem Vorbe-handlungsmedium.

Der Bodenkanal II ist in Materialflußrichtung gesehen über die gesamte Länge des Behälters angeordnet, d. h. konstruktiv in die Behälterseitenwand integriert. Der Kanalboden weist ein Gefälle von I - 2 % auf. Der Bodenkanal II ist mit einer perforierten Abdeckung I2 versehen, die exakt auf Arbeitsniveau des Bedienungspersonals angeordnet ist.

Aus dem Behälter ausgetragenes Behandlungsmedium fließt durch die perforierte Kanalabdeckung I2 in den Bodenkanal II und von dort durch das Gefälle zwangsgeführt in den Bereich der im äußeren Längsbereich angeordneten Pumpe I3. Hier angesammeltes Behandlungsmedium wird mittels Pumpe I3 und Steigrohr I4 permanent dem Standbehälter zugeführt.

Im Bereich der zweiten Kunststoffwanne 5 werden im Wandbereich vertikal und im Bodenbereich quer zur Behälterachse Leckrohre I9 eingesetzt.

Die Leckrohre I9 werden zwischen der ersten Kunststoffwanne 7 und der zweiten Kunststoffwanne 5 in der Kunstkeramikverschleißschicht 6 eingebettet. Über Lecknuten 20 wird die Verbindung von Leckrohr I9 und Leckrohr I9 hergestellt. Leckrohr I9 und Lecknute 20 sind absolut säurebeständig ausgeführt.

Jeder Bereich des Behälters ist somit durch das Kanalsystem I7 miteinander verbunden und überwacht.

Das Kanalsystem I7 mündet behälterkopfseitig in einen Querkanal I6, der stirnseitig jeweils mit einem Steigrohr I5 verbunden ist. Das Steigrohr I5 wird unter dem Mediumspiegel 2 in der Behälterkopfwand nach außen geführt und ist mit einer Schwimmerschaltung I8 versehen. Das gegenüberliegende Steigrohr I5 ist verschlossen.

Bei mechanischer Zerstörung der ersten Kunststoffwanne 7 und der Kunstkeramikverschleißschicht 6 dringt Flüssigkeit in das Leckrohr I9 bzw. in die Lecknute 20 ein. Über das Kanalsystem I7 werden die kopfseitigen Steigrohre I5 geflutet. Die anstehende Flüssigkeitssäule wird über die Schwimmerschaltung I8 registriert und optisch/akustisch zur Anzeige gebracht.

Eine Behälterbauweise ohne Leckanzeigesystem ist in Übereinstimmung mit den öffentlich rechtlichen Bestimmungen möglich.

**Patentansprüche**

1.    Beizbehälter, insbesondere für Stückgut in Feuerverzinkereien, dadurch gekennzeichnet, daß er aus einer ersten und einer zweiten Kunststoffwanne (7,5) mit dazwischenliegender Kunstkeramikschicht (6) besteht und daß der Kunststoffverbundbehälter (5,6,7) von einem Betonmantel (3) umfaßt ist.

2. Beizbehälter nach Anspruch 1, dadurch gekennzeichnet, daß er in seinem äußeren, oberen Bereich über seine gesamte Länge einen mit einer perforierten Abdeckung (12) versehenen Bodenkanal (11) aufweist.

3. Beizbehälter nach Anspruch 1, dadurch gekennzeichnet, daß im Bereich der ersten Kunststoffwanne (7) in die Keramikverschleißschicht (6) eingesetzte, in der Behälterwand vertikal und im Behälterboden quer zur Behälterachse verlaufende, über Lecknuten (20) verbundene Leckrohre (19) angeordnet sind.

4. Beizbehälter nach den Ansprüchen 1 bis 3, dadurch gekennzeichnet, daß der Behälter von einem Leckrohre (19) und Lecknuten (20) integrierenden Kanalsystem (17) durchzogen ist, welches an beiden Behälterstirnseiten in je ein Steigrohr (15) mündet, wobei das eine Steigrohr verschlossen ist und das andere unterhalb des Mediumspiegels (2) des Behälters nach außen einer Signaleinrichtung (18) zugeführt wird.

5. Beizbehälter nach Anspruch 4, dadurch gekennzeichnet, daß die Signalvorrichtung (18) eine mit einer optisch/akustischen Anzeige verbundene Schwimmereinrichtung ist.

## Claims

1. Pickling vat particularly for piece goods in hot dip galvanizing plant characterized in that it consists of a first and a seconds plastics basin (7, 5) with synthetic ceramic layers (6) lying between them and that the composite plastics container (5, 6, 7) is surrounded by a concrete cover (3).

2. Pickling vat according to Claim 1, characterised in that in its outer upper region it has over its entire length a floor channel provided with a perforated cover (12).

3. Pickling vat according to Claim 1, characterised in that in the region of the first plastics basin (7) set into the ceramic wear layer (6) vertically in the case of the container wall and running transversely to the axis of the container in the container floor there are arranged leak tubes (19) connected via leak grooves (20).

4. Pickling vat according to Claims 1 to 3, characterised in that the container is traversed by an integrated channel system (17) from leak tubes (19) and leak grooves (20) which debouch at both end faces of the container in each case into a riser tube (15) wherein the one riser tube is closed and the other is fed below the level of the medium (2) of the container outwardly to a signal device (18).

5. Pickling vat according to Claim 4, characterised in that the signal device (18) is a float unit connected with an optical/acoustic indicator.

## Revendications

1. Bac de décapage, en particulier pour objets divers dans les ateliers de galvanisation à chaud, caractérisé en ce qu'il est constitué d'une première et d'une seconde cuve en matière plastique (7, 5) et d'une couche de céramique synthétique (6) interposée entre elles, et que ce récipient composite (5, 6, 7) est entouré d'une enveloppe de béton (3).

2. Bac de décapage selon la revendication 1, caractérisé en ce qu'il comporte dans sa partie supérieure, à l'extérieur, un canal (11) s'étendant sur toute la longueur du bac, encastré dans le sol et pourvu d'un recouvrement perforé (12).

3. Bac de décapage selon la revendication 1, caractérisé en ce que des tubes de fuite (19) sont incorporés dans la région de la seconde cuve (7) en matière plastique à l'intérieur de la couche d'usure (6) en céramique, tubes qui sont orientés verticalement dans les parois latérales du bac et transversalement à l'axe du bac dans le fond de celui-ci, et qui communiquent entre eux par des rainures de fuite (20).

4. Bac de décapage selon les revendications 1 à 3, caractérisé en ce qu'il est parcouru dans toute son étendue par un système de canaux (17) intégrant des tubes de fuite (19) et des rainures de fuite (20), système qui débouche dans un tuyau de montée (15) à chacune des deux extrémités du bac, l'un des tuyaux de montée étant fermé et l'autre étant sorti à l'extérieur, sous le niveau du milieu de traitement (2) dans le bac, où il est raccordé à un dispositif de signalisation (18).

5. Bac de décapage selon la revendication 4, caractérisé en ce que le dispositif de signalisation (18) est un appareil à flotteur connecté à un organe indicateur optique/acoustique.

Fig. 1

Fig.2

EP 0 234 239 B1

**Fig.3**

**Fig.4**